# FASCICULE DE BREVET EUROPEEN

(11) **EP 0 925 259 B1**
(45) Date de publication et mention de la délivrance du brevet: **06.10.2004**
(21) Numéro de dépôt: 98937594.4
(22) Date de dépôt: 09.07.1998
(51) Int. Cl.: C03B 9/16, C03B 9/34, B29C 49/56

(54) **MOULE A TIROIR PIVOTANT**
FORM MIT KIPPÖFFNER
MOULD WITH PIVOTING DRAWER

(30) Priorité: 15.07.1997 FR 9708935
(43) Date de publication de la demande: 30.06.1999
(73) Titulaire: SAINT-GOBAIN EMBALLAGE, 92400 Courbevoie (FR)
(72) Inventeur: DESBIENDRAS, Philippe, F-76470 Le Tréport (FR); BADIN, Rémy, F-76910 Criel (FR)
(74) Mandataire: Muller, René
(86) Numéro de dépôt international: PCT/FR1998/001485
(87) Numéro de publication internationale: WO 1999/003788

(56) Documents cités:
- WO-A-92/05027
- DD-A- 11 728
- DE-C- 232 286
- DE-C- 437 403
- DE-C- 541 865
- DE-C- 586 683
- FR-A- 1 483 780
- GB-A- 639 323
- US-A- 3 268 322

## Description

La présente invention est relative à un moule dans lequel une matière organique ou minérale est mise en forme par application de techniques connues telles que soufflage, pressage, injection réactive, le moule étant le cas échéant refroidi ou, au contraire, muni d'un moyen de chauffage. Différentes techniques parmi celles citées ci-dessus sont fréquemment mises en oeuvre conjointement.

Le problème ayant en particulier suscité les études approfondies réalisées par les inventeurs est celui du démoulage, dans le cas d'objets de formes particulières à sections carrées, rectangulaires ou de géométries plus complexes. En effet, lorsqu'un objet à section rectangulaire est fabriqué dans un moule classique à deux coquilles, avec un plan de joint du moule coupant par exemple, la section rectangulaire de l'empreinte interne du moule en deux parties égales, parallèlement à deux côtés du rectangle, le démoulage habituel par ouverture du moule par rotation des coquilles selon un axe perpendiculaire à ladite section et inclus dans le plan de joint, est proscrite : un tel démoulage entraînerait un accrochage de la matière moulée par le matériau constituant les parois de l'empreinte interne, dans la zone des deux sommets de la section rectangulaire les plus éloignés de l'axe de rotation.

Plusieurs solutions connues de ce problème ont été proposées.

Selon une première approche, on a imaginé un décalage angulaire de l'empreinte dans le moule de telle sorte, par exemple, que le plan de joint coupe la section rectangulaire de cette empreinte suivant l'une de ses diagonales. Le démoulage par rotation des coquilles, tel que décrit ci-dessus, est alors rendu possible. Cette solution ne donne cependant pas satisfaction dans certains types de fabrications. Ainsi, la fabrication de produits verriers creux s'effectue fréquemment en deux étapes principales à l'aide de machines I.S. (Individual Section). Au cours de la première étape, la paraison ou goutte de verre est introduite dans un moule ébaucheur dont la base est prolongée par un moule de bague servant à la mise en forme définitive de la partie supérieure ouverte du produit fabriqué.

Le moule de bague a également une fonction de préhension de l'ébauche dans une opération ultérieure de retournement de celle-ci, préalable à la deuxième étape dans laquelle le moule ébaucheur est remplacé par un moule finisseur dans lequel le produit creux est mis en forme par soufflage.

Bien entendu, le positionnement de l'ébauche dans le moule ébaucheur et donc la forme de celui-ci doivent être adaptés en fonction du positionnement de l'empreinte interne dans le moule finisseur. Malgré une telle adaptation, lorsque cette empreinte est ménagée avec le décalage angulaire tel que décrit ci-dessus, une répartition homogène du verre dans l'empreinte ne peut pas être obtenue. En effet, les zones de la paraison proches des petits côtés du rectangle sont plus chaudes que celles proches des grands côtés, car elles sont entourées d'une moindre quantité de matériau constitutif du moule susceptible d'évacuer la chaleur du verre. De plus, l'acheminement régulier de verre à proximité des coins est malaisé. Dans ces conditions, les spécialistes ont constaté qu'une introduction de l'ébauche dans le moule finisseur avec un décalage angulaire rendait plus difficile l'obtention de produits aux formes symétriques désirées ; par rapport à ces formes, des écrasements ou autres transformations, notamment dans les coins, peuvent au contraire être observés. Dans certains cas, il peut s'avérer nécessaire d'introduire dans le moule finisseur une ébauche plus élaborée, c'est-à-dire dont la forme- s'approche plus de la forme finale.

L'inhomogénéité de températures et de répartition de la masse de verre se traduit d'autre part par une quasi-impossibilité de faire coïncider sur le produit les lignes correspondant aux marques du plan de joint du moule ébaucheur et du moule finisseur. Au contraire, on ne peut pas éviter de manière contrôlée et reproductible l'apparition de deux lignes différentes pour une configuration de moule donnée ; l'aspect du produit en est affecté.

Une variante de la première approche à présent commentée consistant en un décalage angulaire de l'empreinte, est connue sous la désignation de « moule à plan de joint brisé ». Avec cette variante, les inconvénients liés à l'inhomogénéité de la masse de verre demeurent. Qui plus est, ce type de plan de joint laisse des marques plus importantes sur le produit fini, sans que les raisons en soient bien élucidées à l'heure actuelle ; l'usure des moules de ce type est du reste particulièrement rapide.

Selon une deuxième approche, on a donc tenté de supprimer le décalage angulaire de l'empreinte auquel est imputable la formation de dissymétries sur certains produits obtenus, tout en évitant l'accrochage de la matière moulée par le moule au moment du démoulage, notamment dans les coins comme indiqué précédemment. Pour ce faire, la partie du moule constituant la face de l'empreinte la plus distante de l'axe d'ouverture du moule pouvait être rendue mobile par translation. Dans une telle configuration, il paraissait cependant difficile d'éviter des mécanismes périphériques complexes, encombrants, soumis à d'importantes contraintes de torsion et, finalement, à une usure rapide et un démontage et/ou nettoyage trop malaisé.

En conséquence, les inventeurs ont abouti à la présente invention qui a pour objet un moule à deux coquilles au moins. Plus particulièrement, l'invention se caractérise par au moins un élément mobile en rotation par rapport à une première coquille selon un axe parallèle à l'axe d'ouverture du moule, et par le fait qu'en position fermée du moule une partie de la surface dudit élément pivotant constitue une partie de l'empreinte interne du moule, située entre les parties de l'empreinte interne formées par les coquilles et distante de l'axe central du moule. L'axe de rotation dudit élément pivotant est positionné de manière à ce que la partie de sa surface constituant une partie de l'empreinte interne du moule s'éloigne de l'axe central du moule pendant l'ouverture de ce dernier.

Ainsi, au moment du démoulage, la paroi de l'empreinte interne susceptible d'accrocher des coins du produit moulé se dérobe progressivement de sorte qu'un tel accrochage ne peut plus se produire. En second lieu, une disposition de l'empreinte interne symétriquement par rapport à la forme générale du moule et à son plan de joint n'est pas incompatible avec l'invention ; le risque de formation de dissymétries non désirées est ainsi minimal.

De préférence, le moule comprend un moyen de fermeture de l'élément pivotant de l'invention, ce moyen de fermeture présentant une surface d'appui qui agit sur l'élément pivotant lors de la fermeture du moule. Cette surface d'appui peut appartenir à une pièce extérieure aux coquilles du moule. Cependant, elle appartient avantageusement à une seconde coquille elle-même ou à un autre élément pivotant similaire monté mobile en rotation sur une telle seconde coquille.

Quant au moyen d'ouverture, par rapport à la première coquille, dudit élément pivotant qui est monté sur elle, il applique de manière préférée sur ledit élément pivotant une force de réaction. C'est cette force de réaction qui garantit le contact de l'élément avec ladite surface d'appui du moyen de fermeture évoqué précédemment, lors de la phase terminale de fermeture du moule, et de la phase initiale de son ouverture. Bien entendu, la force de réaction est appliquée sur une face de l'élément pivotant autre que celle susceptible d'entrer au contact avec le moyen de fermeture, l'ouverture et la fermeture de l'élément pivotant correspondant aux deux sens opposés de sa liberté de rotation par rapport à ladite première coquille. Le moyen d'application de la force de réaction peut être extérieur aux coquilles du moule ou, au contraire, installé dans ladite première coquille.

Eventuellement, l'élément pivotant de l'invention est également mobile en translation, notamment selon une direction sensiblement perpendiculaire à la partie ou la paroi de l'empreinte interne du moule constituée par ledit élément. Cette variante permet d'obtenir un dégagement plus important de l'élément au démoulage ; dans certains modes de réalisation, il convient cependant de veiller à ce que cet avantage soit supérieur à l'inconvénient précité de mécanismes périphériques complexes, encombrants et soumis à de grandes contraintes mécaniques.

Selon un mode de réalisation particulièrement avantageux, le moule comprend deux éléments montés sur deux coquilles différentes qui, dans la position fermée du moule, se joignent pour former une partie de l'empreinte interne exempte de discontinuité visible d'un élément à l'autre, si ce n'est la marque relativement faible du plan de joint latéral qu'ils déterminent. Cette variante est particulièrement efficace quand la partie en question de l'empreinte interne est une surface complexe ou à facettes ou une surface arrondie portant des motifs en relief constituant autant de causes d'accrochage entre le moule et le produit moulé au moment du démoulage.

Conformément à l'invention, chaque coquille porte de préférence 0, 1 ou 2 éléments pivotants. Dans le cas d'un moule à deux coquilles, le montage d'un seul élément d'un côté d'une seule coquille procurera déjà le résultat escompté dans la plupart des cas. Le montage d'un second élément de l'autre côté de la coquille en comportant déjà un premier est possible. De plus, les dimensions de chacun de ces deux éléments peuvent être diminuées de telle manière qu'il forme un premier demi-élément auquel on en associe, le cas échéant, un second porté par l'autre coquille. Ceci correspond à la situation du mode de réalisation précédemment décrit spécialement destiné aux surfaces moulées complexes.

Comme exposé ci-dessus, le moule de l'invention est particulièrement bien adapté à la fabrication de produits verriers, notamment creux tels que bouteilles, flacons et prend tout son intérêt en cas de formes moulées complexes. Ce moule est avantageusement un moule finisseur de machine I.S.

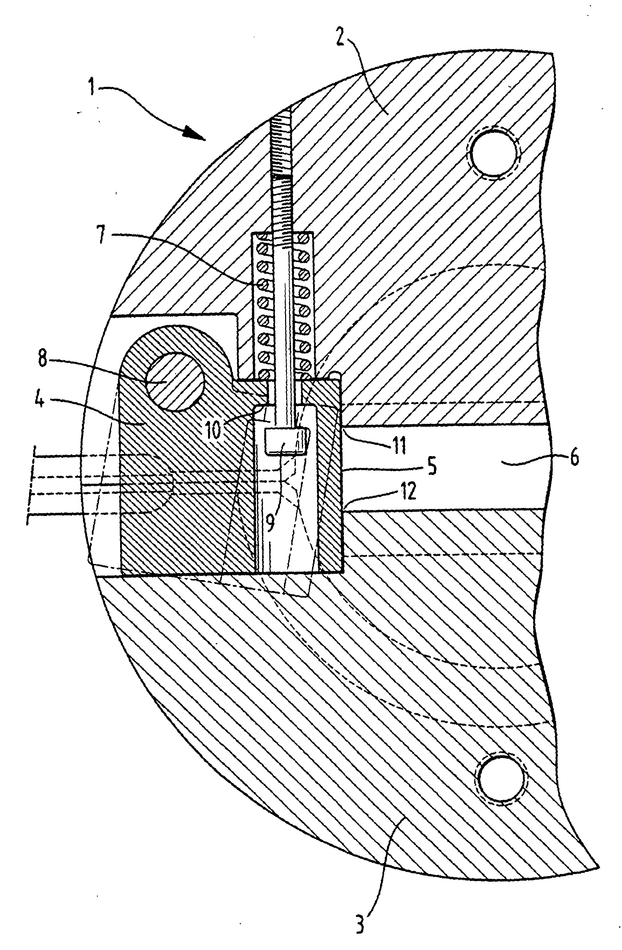

Il sera maintenant décrit en référence à la figure en annexe qui est une représentation schématique d'un demi-moule selon l'invention, vu en coupe, en position fermée.

Le moule 1 est essentiellement constitué de deux coquilles 2 et 3 sensiblement hémicylindriques. Un élément 4 est monté mobile en rotation d'axe 8 sur la coquille 2. Un évidement en partie dans la coquille 2 et en partie dans la coquille 3 a été prévu pour recevoir l'élément 4.

L'empreinte interne 6 du moule 1 est constituée des parois des coquilles 2 et 3 et de la paroi 5 de l'élément 4.

Ce dernier est pourvu d'un évidement vertical le traversant de part en part et dont la partie supérieure, plus étroite, forme une butée 10. La tige d'une vis 9 est introduite par le dessous dans cet évidement en en traversant la partie supérieure 10 ; la tête de la vis 9 ayant un diamètre trop important serait, pour sa part, retenue par la butée 10, ce qui limite la course de la vis 9 vers le haut.

La vis 9 est vissée à une hauteur réglable dans la coquille 2, dans laquelle un ressort 7 est installé autour de la tige de la vis 9. L'extrémité supérieure du ressort 7 est en butée contre une partie de la coquille 2 de forme adéquate ; l'extrémité inférieure du ressort applique une certaine force de réaction sur la face supérieure de l'élément 4.

Lors de l'ouverture du moule, cette force fait pivoter l'élément 4 jusqu'à une position telle que représentée en pointillés. Cette position est atteinte progressivement au fur et à mesure que les coquilles 2 et 3 s'écartent l'une de l'autre, la face inférieure de l'élément 4 étant en butée contre la coquille 3. La tige de la vis 9 passe à travers la partie supérieure de l'alésage ménagé dans l'élément 4 avec un certain jeu. Le pivotement de l'élément 4 est limité jusqu'à la position dans laquelle la tête de la vis 9 vient en contact avec la butée 10.

Lors de la fermeture du moule, l'élément 4 effectue le pivotement inverse sous l'effet de la force exercée par la coquille 3 sur la face inférieure de l'élément 4 jusqu'à ce que la face 5 de l'élément 4 obture l'empreinte interne 6.

Les marques du plan de joint du moule représenté coïncident avantageusement avec les arêtes du flacon correspondant à ses coins 11, 12.

Etant donné la description qui précède de l'opération d'ouverture du moule, il est clair que tout risque d'accrochage de matière moulée par les parois du moule lors du démoulage est écarté, y compris au voisinage du coin 11 le plus critique.

Dans le moule représenté sur la figure, parfaitement adapté à une utilisation comme moule finisseur dans la fabrication de produits verriers creux, l'ébauche peut être positionnée dans l'empreinte interne symétriquement par rapport à la géométrie générale du moule et à son plan de joint. Le verre peut alors être refroidi de manière homogène et symétrique par le matériau environnant du moule ; il en résulte finalement une distribution des températures au sein du verre et une répartition de celui-ci dans l'empreinte interne elles-mêmes homogènes et symétriques.

Le démoulage et l'entretien du moule de l'invention sont simplifiés.

En raison du faible encombrement du mécanisme constitué par l'élément pivotant, il devient envisageable de travailler en multiple paraison et non nécessairement en simple paraison comme à l'heure actuelle, c'est-à-dire de fabriquer deux flacons ou quatre flacons, par exemple, par moule.

## Revendications

1. Moule (1) comportant au moins deux coquilles (2) et (3), **caractérisé en ce qu'**au moins un élément (4) est monté mobile en rotation selon un axe (8) parallèle à l'axe d'ouverture du moule (1) sur une première coquille (2), et **en ce qu'**en position fermée du moule (1), une partie (5) de la surface de l'élément (4) coïncide avec une partie de l'empreinte interne (6) du moule (1) située entre les parties de l'empreinte interne (6) formées par les coquilles (2) et (3) et distante de l'axe central du moule (1), la position de l'axe (8) étant choisie de manière à ce que la partie (5) de la surface d'au moins un élément (4) s'éloigne de l'axe central du moule (1) pendant l'ouverture dudit moule (1).

2. Moule (1) selon la revendication 1, **caractérisé en ce qu'**il comprend un moyen de fermeture de l'élément (4) comportant une surface d'appui agissant sur l'élément (4) lors de la fermeture du moule (1).

3. Moule (1) selon la revendication 2, **caractérisé en ce que** ledit moyen de fermeture de l'élément (4) consiste en une seconde coquille (3) ou en un autre élément (4) similaire monté sur une seconde coquille (3).

4. Moule (1) selon l'une des revendications 1 à 3, **caractérisé en ce qu'**il comporte un moyen d'ouverture (7) de l'élément (4) appliquant sur celui-ci une force de réaction.

5. Moule (1) selon l'une des revendications 1 à 4, **caractérisé en ce qu'**au moins l'un desdits éléments (4) est également mobile en translation.

6. Moule (1) selon la revendication 5, **caractérisé en ce que** la direction de la translation est sensiblement perpendiculaire à la partie d'empreinte interne (6) du moule (1) délimitée par ledit élément (4).

7. Moule (1) selon l'une des revendications 1 à 6, **caractérisé en ce que** deux éléments (4) montés sur deux coquilles (2) et (3) différentes délimitent une partie de l'empreinte interne (6) du moule (1) selon une surface ne présentant aucune discontinuité d'un élément (4) à l'autre.

8. Moule (1) selon l'une des revendications 1 à 7, **caractérisé en ce que** chaque coquille (2) ou (3) porte 0, 1 ou 2 éléments (4) mobiles en rotation.

9. Moule (1) selon l'une des revendications 1 à 8 destiné à la fabrication de produits verriers.

10. Moule (1) selon la revendication 9 consistant en un moule finisseur destiné à la fabrication de produits verriers creux.

## Patentansprüche

1. Form (1), die mindestens zwei Formteile (2) und (3) umfasst, **dadurch gekennzeichnet, dass** mindestens ein Element (4) um eine zur Öffnungsachse der Form (1) parallele Achse (8) drehbar an dem ersten Formteil (2) angebracht ist, und dass in geschlossener Position der Form (1) ein Bereich (5) der Oberfläche des Elements (4) mit einem Bereich des Formnests (6) der Form (1), der sich zwischen den Bereichen des Formnests (6) befindet, die von den Formteilen (2) und (3) gebildet werden, übereinstimmt und von der mittigen Achse der Form (1) beabstandet ist, wobei die Position der Achse (8) derart gewählt wird, dass der Bereich (5) der Oberfläche mindestens eines Elements (4) sich von der mittigen Achse der Form (1) bei deren Öffnen entfernt.

2. Form (1) nach Anspruch 1, **dadurch gekennzeichnet, dass** sie ein Mittel zum Verschließen des Elements (4) enthält, das eine Auflagefläche umfasst, die beim Schließen der Form (1) auf das Element (4) einwirkt.

3. Form (1) nach Anspruch 2, **dadurch gekennzeichnet, dass** das Mittel zum Schließen des Elements (4) aus einem zweiten Formteil (3) oder einem gleichen weiteren Element (4) besteht, das auf einem zweiten Formteil (3) angebracht ist.

4. Form (1) nach einem der Ansprüche 1 bis 3, **dadurch gekennzeichnet, dass** sie zum Öffnen des Elements (4) ein Mittel (7) enthält, das auf jenes eine Reaktionskraft ausübt.

5. Form (1) nach einem der Ansprüche 1 bis 4, **dadurch gekennzeichnet, dass** mindestens eines der Elemente (4) auch hin- und hergehend beweglich ist.

6. Form (1) nach Anspruch 5, **dadurch gekennzeichnet, dass** die Richtung der Translationsbewegung im Wesentlichen senkrecht zu dem Bereich des Formnests (6) der Form (1) verläuft, der von dem Element (4) begrenzt wird.

7. Form (1) nach einem der Ansprüche 1 bis 6, **dadurch gekennzeichnet, dass** zwei Elemente (4), die an zwei verschiedenen Formteilen (2) und (3) angebracht sind, einen Bereich des Formnests (6) der Form (1) in einer Fläche begrenzen, die keine Diskontinuität von einem Element (4) zum nächsten aufweist.

8. Form (1) nach einem der Ansprüche 1 bis 7, **dadurch gekennzeichnet, dass** jedes Formteil (2) oder (3) 0, 1 oder 2 drehbare Elemente (4) trägt.

9. Form (1) nach einem der Ansprüche 1 bis 8, die zur Herstellung von Glaserzeugnissen vorgesehen ist.

10. Form (1) nach Anspruch 9, die aus einer Endbearbeitungsform besteht, die zur Herstellung von Hohlglaserzeugnissen vorgesehen ist.

## Claims

1. Mould (1) comprising at least two shells (2) and (3), **characterised in that** at least one element (4) is mounted so as to be able to move in rotation on an axis (8) parallel to the opening axis of the mould (1) on a first shell (2), and **in that**, in the closed position of the mould (1), a part (5) of the surface of the element (4) coincides with part of the internal cavity (6) of the mould (1) situated between the parts of the internal cavity (6) formed by the shells (2) and (3) and distant from the central axis of the mould (1), the position of the axis (8) being chosen so that the part (5) of the surface of at least one element (4) moves away from the central axis of the mould (1) during the opening of the said mould (1).

2. Mould (1) according to Claim 1, **characterised in that** it comprises a means of closing the element (4) comprising a bearing surface acting on the element (4) when the mould (1) is closed.

3. Mould (1) according to Claim 2, **characterised in that** the said means of closing the element (4) consists of a second shell (3) or another similar element (4) mounted on a second shell (3).

4. Mould (1) according to one of Claims 1 to 3, **characterised in that** it comprises a means (7) of opening the element (4) applying a reaction force to the latter.

5. Mould (1) according to one of Claims 1 to 4, **characterised in that** at least one of the said elements (4) is also able to move in translation.

6. Mould (1) according to Claim 5, **characterised in that** the direction of the translation is substantially perpendicular to the internal cavity part (6) of the mould (1) delimited by the said element (4).

7. Mould (1) according to one of Claims 1 to 6, **characterised in that** two elements (4) mounted on two different shells (2) and (3) delimit a part of the internal cavity (6) of the mould (1) on a surface exhibiting no discontinuity from one element (4) to the other.

8. Mould (1) according to one of Claims 1 to 7, **characterised in that** each shell (2) or (3) carries 0, 1 or 2 elements (4) able to move in rotation.

9. Mould (1) according to one of Claims 1 to 8, intended for manufacturing glass products.

10. Mould (1) according to Claim 9, consisting of a finishing mould intended for manufacturing hollow glass products.
